# EUROPÄISCHE PATENTSCHRIFT

(11) **EP 1 239 567 B1**
(45) Veröffentlichungstag und Bekanntmachung des Hinweises auf die Patenterteilung: **03.11.2010**
(21) Anmeldenummer: 02100172.2
(22) Anmeldetag: 22.02.2002
(51) Int. Cl.: H02J 7/14, H04M 1/02, H02K 7/18, H02J 7/32

(54) **Mobiles Kommunikationsendgerät**
Mobile communication device
Appareil de communication mobile

(30) Priorität: 09.03.2001 DE 10111492
(43) Veröffentlichungstag der Anmeldung: 11.09.2002
(73) Patentinhaber: Palm, Inc., Sunnyvale, CA 94085-2801 (US)
(72) Erfinder: Blaimberger, Frank, 86399, Bobingen (DE)
(74) Vertreter: Samson & Partner

(56) Entgegenhaltungen:
- EP-A- 0 409 819
- WO-A-00/07277
- WO-A-00/38294
- WO-A-97/39516

## Beschreibung

Die Erfindung betrifft ein mobiles Kommunikationsendgerät mit einer Vielzahl von integrierten elektronischen Bauteilen und mindestens einer Energiezelle zur Stromversorgung zumindest eines der integrierten elektronischen Bauteile.

Zu mobilen Kommunikationsendgeräten zählen zum Beispiel Mobilfunkgeräte (Handy) und PDAs (Personal Digital Assistant = Handheld Computer). Vor allem das Mobilfunkgerät ist in der heutigen Zeit ein fester Bestandteil des täglichen Lebens, mit dessen Hilfe, neben dem einfachen Telefonieren, die unterschiedlichsten Transaktionen ausgeführt werden können. Für die Stromversorgung sind in dem Mobilfunkgerät integrierte Energiezellen (Akku) zuständig, die für eine bestimmte Standby- und Gesprächszeit des Mobilfunkgerätes Energie liefern.

Liefern die Akkus keine Energie mehr, werden diese bisher mit einer Kabelverbindung zu einer externen Energieversorgung wieder aufgeladen. Das mobile Kommunikationsendgerät ist also an eine externe Energieversorgung gebunden, um wieder einsatzbereit zu werden.

Hierbei ist von Nachteil, daß nicht immer solch eine externe Energieversorgung zur Verfügung steht oder die zugehörige Kabelverbindung fehlt. Bei einem Mobilfunkgerät mit einem leeren Akku besteht also keine Möglichkeit, "unterwegs" den Akku aufzuladen, um das Mobilfunkgerät wieder nutzen zu können. In Notsituationen kann dies äußerst problematisch sein.

Auch für PDAs besteht bislang keine Möglichkeit, ohne eine Kabelverbindung, einen leeren Akku zumindest soweit zu laden, daß genügend Energie für beispielsweise einen Speichervorgang zur Verfügung steht.
Es ist daher Aufgabe der Erfindung, ein mobiles Kommunikationsendgerät zur Verfügung zu stellen, das ohne eine Zuführung von Energie von einer externen Energieversorgung, ein, zumindest teilweises, Aufladen der Energiezelle des Kommunikationsendgerätes ermöglicht.

WO 00/07277 A2 offenbart eine mobile Kommunikationsvorrichtung mit einem Schwungelement. Das Schwungelement weist ein magnetisches Gegengewicht auf, das auf seinem Außenumfang mit einer Stahlkugel ausgestattet ist. Durch Bewegungen der mobilen Kommunikationsvorrichtung kann das Schwungelement in Bewegung versetzt werden, durch die mittels Induktion Energie erzeugt wird.

WO 00/38294 A2 offenbart ein elektrisches Ladesystem mit einer elektrischen Maschine, die zur Erzeugung eines Vibrationsalarms eine Masse in Rotation versetzen kann und die mittels eines durch Wechselwirkung mit einem Magnetfeld drehbaren Magneten als Generator zur Energieerzeugung betrieben werden kann.

Diese Aufgabe wird durch die Merkmale des ersten Patentanspruches gelöst.

Demgemäß schlägt der Erfinder vor, ein mobiles Kommunikationsendgerät mit einer Vielzahl von integrierten elektronischen Bauteilen und mindestens einer Energiezelle zur Stromversorgung zumindest eines der integrierten elektronischen Bauteile, dahingehend weiterzuentwickeln, daß ein Generator zur Erzeugung von elektrischer Energie aus mechanischer Energie vorgesehen ist. Hierbei wird als Generator eine Vorrichtung verstanden, die mechanische Energie in elektrische Energie umwandelt, wie dies zum Beispiel bei Armbanduhren häufig praktiziert ist und aus den Offenlegungsschriften EP 0998009 A1 oder AU 2148097 bekannt ist.

Hierdurch wird erreicht, daß durch eine Schüttelbewegung beziehungsweise der natürlichen Bewegung der Person, die das mobile Kommunikationsendgerät mitführt, die Energiezellen des mobilen Kommunikationsendgerätes aufgeladen werden. Unabhängig von einer externen Energieversorgung beziehungsweise Stromquelle kann also durch Bewegung des Kommunikationsendgerätes elektrische Energie aus mechanischer Energie erzeugt werden, die beispielsweise eine längere Arbeitszeit an einem PDA ermöglicht, für einen Notruf bei einem Mobilfunkgerät verwendet werden kann oder eine Verlängerung der Standby- und Gesprächszeit bei dem Mobilfunkgerät bewirkt.

Eine besonders vorteilhafte Ausgestaltung des erfindungsgemäßen Kommunikationsendgerätes sieht ein mit dem Generator verbundenes Schwungelement vor, wobei das Schwungelement derart ausgestaltet ist, daß es durch Bewegung des mobilen Kommunikationsendgerätes den Generator antreibt.

Das Schwungelement wird durch Bewegung des mobilen Kommunikationsendgerätes beispielsweise in eine Rotationsbewegung versetzt, die eine Energieerzeugung des angebundenen Generators bewirkt. Weiterhin ist denkbar, daß das Schwungelement selbst einen Magneten darstellt, der sich durch die Bewegung des mobilen Kommunikationsgerätes durch eine Spule des Generators bewegt, wodurch eine Spannung erzeugt wird. Darüber hinaus kann die Umwandlung von mechanischer Energie in elektrische Energie auch mit Hilfe eines Piezoelementes erfolgen, wobei eine träge Masse Spannungen in dem Piezoelement hervorruft.

Selbstverständlich muß eine elektrische Schaltung vorgesehen werden, die in an sich bekannter Weise, die auftretenden Spannungen so umwandelt, daß ein elektrischer Energiespeicher oder Energiezelle geladen werden kann.

Eine Ausgestaltung des erfindungsgemäßen mobilen Kommunikationsendgerätes sieht vor, daß das Schwungelement eine Unwucht ausbildet. Das Schwungelement ist also exzentrisch angeordnet, daß heißt, der Massenschwerpunkt des Schwungelementes befindet sich außerhalb seines Befestigungsmittelpunktes.

Weiterhin kann das Schwungelement über eine Achse mit dem Generator verbunden sein. Führt das Schwungelement beispielsweise eine Rotationsbewegung aus, ist diese Achse die Drehachse. Bei exzentrischer Anordnung befindet sich die Drehachse also außerhalb des Massenschwerpunktes des Schwungelementes.

In einer besonders vorteilhaften Weiterentwicklung des erfindungsgemäßen mobilen Kommunikationsendgerätes weist das Schwungelement mindestens ein Führungselement mit einer Länge L und ein Gewichtselement auf, das entlang des Führungselementes beweglich gelagert ist. Zum Beispiel kann das Führungselement eine Aussparung zumindest im Inneren des Schwungelement darstellen und als eine Art Schienen ausgestaltet sein, das im Nut- und Federprinzip das Gewichtselement führt.

Eine andere Ausgestaltung sieht vor, daß das Führungselement senkrecht zur Achse zwischen dem Schwungelement und dem Generator angeordnet ist.

Darüber hinaus kann die Achse die Länge L des Führungselementes in unterschiedliche Längen 11 und 12 unterteilen. Hierbei ist es vorteilhaft, wenn die Längen 11 und 12 die Beziehung 11 · X = 12 zueinander aufweisen, und das Verhältnis von 11 zu 12 derart eingestellt wird, daß ein optimales Rotieren des Schwungelementes stattfinden kann. Zum Beispiel kann für X vorzugsweise gelten: 1,2 < X < 4.

In einer Weiterbildung des erfindungsgemäßen mobilen Kommunikationsendgerätes weist das Schwungelement eine Drehscheibe auf. Die Drehscheibe kann sowohl kreisförmig als auch in Form einer Ellipse ausgebildet sein und trägt das Führungselement und das Gewichtselement.

Darüber hinaus kann ein Leitungssystem vorgesehen sein, das die mindestens eine Energiezelle und den Generator miteinander verbindet. Über dieses Leitungssystem kann die von dem Generator gewonnene Energie an die Energiezelle geleitet werden, so daß bei einem Mobilfunkgerät sowohl eine längere Standbyzeit, als auch eine längere Gesprächszeit die Folge sind.

Eine andere Weiterentwicklung des erfindungsgemäßen mobilen Kommunikationsendgerätes sieht vor, daß der Generator als Motor für einen Vibrationsalarm ausgebildet ist. Bei Eintreffen eines Anrufes kann dieser Motor zu einer Drehbewegung angeregt werden. Dies ruft eine Schüttelbewegung des Schwungelementes hervor, so daß als Zeichen für den eingetroffenen Anruf ein Vibrationsalarm ausgegeben wird.

Weiterhin kann eine Steuerung vorgesehen sein, die derart ausgebildet ist, daß der Generator von einem Generatorbetrieb auf einen Motorbetrieb umgepolt werden kann. Die Steuerung enthält vorzugsweise eine Motor/Generator-Steuerungslogik, die automatisch bewirkt, daß entweder ein Vibrationsalarm ausgegeben wird oder daß die Energiezellen des mobilen Kommunikationsendgerätes aufgeladen werden. Entsprechende Signale können über das Leitungssystem dem Generator beziehungsweise Motor zugeleitet werden.

Im folgenden wird die Erfindung anhand eines bevorzugten Ausführungsbeispieles mit Hilfe der einzigen Figur näher beschrieben.

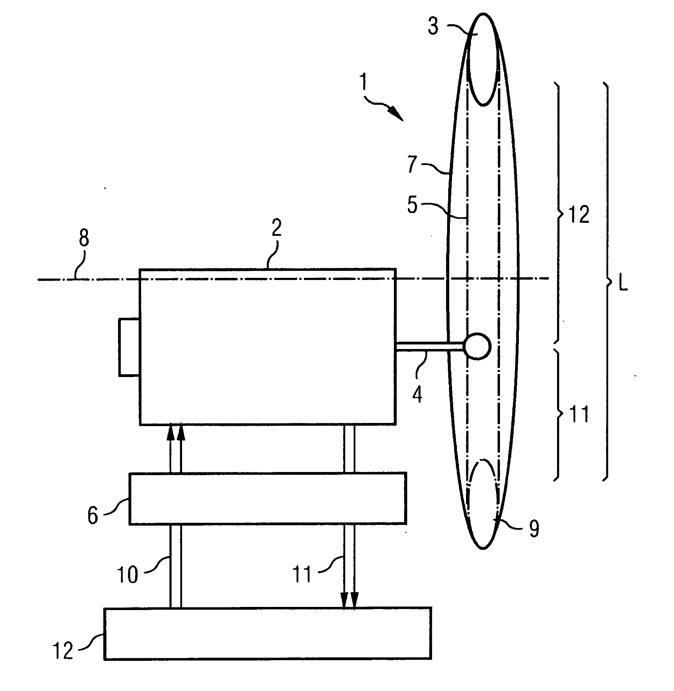

Die Figur 1 zeigt einen Schnitt durch den für die Erfindung wesentlichen Teil des erfindungsgemäßen mobilen Kommunikationsendgerätes, wobei die schematisch dargestellten Vorrichtungen sowohl für eine alternative Energiegewinnung des mobilen Kommunikationsendgerätes als auch zur Ausgabe eines Vibrationsalarmes bei einem Handy zuständig sein können.

Das mobile Kommunikationsendgerät enthält ein Schwungelement 1 mit einer Drehscheibe 7, einem Führungselement 5 und einem Gewichtselement 3. Das Gewichtselement 3 ist nicht an der Drehscheibe 7 fixiert, sondern entlang des Führungselementes 5 über eine Länge L beweglich gelagert, wobei die Drehscheibe 7 hierfür eine Aussparung zumindest in ihrem Inneren aufweist. Die Figur 1 zeigt die äußersten Positionen des Gewichtselementes 3, wobei die Position am Punkt 9 gestrichelt angedeutet ist.

Die Achse 4 verbindet das Schwungelement 1 mit einem Generator 2, wobei die Achse 4 das Schwungelement 1 außerhalb dessen Mittellinie 8 befestigt. Das Führungselement 5 ist senkrecht zur Achse 4 angeordnet und wird durch diese in eine Länge 11 und eine Länge 12 unterteilt. In diesem Ausführungsbeispiel ist 11 kürzer als 12.

Durch diese erfindungsgemäßen Ausgestaltungen des mobilen Kommunikationsendgerätes wird erreicht, daß das Schwungelement 1 nicht nur eine Schüttelbewegung ausführt, wie dies beispielsweise bei einem Vibrationsalarm der Fall ist, sondern eine Rotationsbewegung, aus der mit Hilfe des Generators elektrische Energie erzeugt werden kann. Diese Rotationsbewegung des Schwungelementes 1 resultiert zum Beispiel aus der natürlichen Bewegung einer Person, die das Kommunikationsendgerät mit sich trägt oder einer gezielten Schüttelbewegung des mobilen Kommunikationsendgerätes.

In dem bevorzugten Ausführungsbeispiel stellt der Generator 2 einen Motor für einen Vibrationsalarm dar. Mit Hilfe einer Steuerung 6 kann der Generator 2 je nach Bedarf von einem Motorbetrieb, dargestellt durch die Pfeile 10, auf einen Generatorbetrieb, dargestellt durch die Pfeile 11, umgepolt werden.

Bei dem Motorbetrieb 10 wird von der Energiezelle 12 Energie zur Verfügung gestellt, bei dem Generatorbetrieb 11 hingegen liefert der Generator 2 Energie an die Energiezelle 12. Bei Generatorbetrieb 11 wird sowohl die Standbyzeit eines mobilen Kommunikationsendgerätes als auch die Zeit, die für ein mobiles Telefongespräch zur Verfügung steht, verlängert. Ist keine Energie in der Energiezelle 12 mehr vorhanden, kann durch eine Schüttelbewegung, unabhängig von externen Stromquellen, Energie gewonnen werden, die beispielsweise für das Absetzen eines Notrufes ausreicht.

Es versteht sich, daß die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.
Insgesamt wird durch die Erfindung ein mobiles Kommunikationsendgerät vorgestellt, das ohne Energiezuführung von einer externen Energieversorgung ein, zumindest teilweises, Aufladen der Energiezelle des Kommunikationsendgerätes erlaubt.

## Patentansprüche

1. Mobile Kommunikationsvorrichtung mit
- einer Vielzahl von integrierten elektronischen Bauteilen und mindestens einer Energiezelle (12) zur Stromversorgung zumindest eines der integrierten elektronischen Bauteile,
- einer elektrischen Maschine (2) zur Erzeugung von elektrischer Energie aus durch Bewegung der mobilen Kommunikationsvorrichtung hervorgerufener mechanischer Energie in einem Generatorbetrieb und zur Verwendung als Motor für einen Vibrationsalarm in einem Motorbetrieb, und
- einem mit der elektrischen Maschine (2) verbundenes Schwungelement (1) mit einem entlang eines Führungselements (5) beweglichen Gewichtselement (3), wobei das Schwungelement (1) im Motorbetrieb der elektrischen Maschine (2) durch diese angetrieben zur Vibrationsalarmierung eine Schattelbewegung und im Generatorbetrieb der elektrischen Maschine (2) durch Bewegung der mobilen Kommunikationsvorrichtung eine den Generator antreibende Rotationsbewegung auszuführen vermag.

2. Mobiles Kommunikationsendgerät gemäß Anspruch 1, wobei das Schwungelement (1) als Unwucht ausbildet.

3. Mobiles Kommunikationsendgerät gemäß einem der Ansprüche 1 und 2, wobei das Schwungelement (1) über eine Achse (4) mit der elektrischen Maschine (2) verbunden ist.

4. Mobiles Kommunikationsendgerät gemäß einem der Ansprüche 1 bis 3, wobei das Führungselement (5) eine Länge L aufweist.

5. Mobiles Kommunikationsendgerät gemäß einem der Ansprüche 1 bis 4, wobei das Führungselement (5) senkrecht zu einer Achse (4) zwischen dem Schwungelement (1) und der elektrischen Maschine (2) angeordnet ist.

6. Mobiles Kommunikationsendgerät gemäß dem Anspruch 5, wobei die Achse (4) die Länge L des Führungselementes (5) in unterschiedliche Längen 1 und 12 unterteilt.

7. Mobiles Kommunikationsendgerät gemäß dem Anspruch 6, wobei die Längen 11 und 12 die Beziehung 11 * X = 12 zueinander aufweisen.

8. Moliles Kommunikationsendgerät gemäß dem Anspruch 7, wobei gilt : 1,2 x < 4.

9. Mobiles Kommunikationsendgerät gemäß einem der Ansprüche 1 bis 8, wobei das Schwungelement (1) eine Drehscheibe (7) aufweist.

10. Mobiles Kommunikationsendgerät gemäß einem der Ansprüche 1 bis 9, wobei ein Leitungssystem vorgesehen ist, das die mindestens eine Energiezelle (12) und die elektrische Maschine (2) miteinander verbindet.

11. Mobiles Kommunikationsendgerät gemäß einem der Ansprüche 1 bis 10, mit einer Steuerung (6) zum Umpolen der elektrischen Maschine vom Generatorbetrieb auf den Motorbetrieb.

## Claims

1. A mobile communication device comprising
- a plurality of integrated electronic components and at least one energy cell (12) for supplying electric current to at least one of the integrated electronic components,
- an electric machine (2) for generating electric energy from mechanical energy caused by movement of the mobile communication device in generator operation and for use as an engine for a vibration alarm in an engine operation, and
- a flywheel element (1) connected to the electric machine (2) having a weight element (3) movable along the guiding element (5), wherein the flywheel element (1) is capable of performing a shaking movement for vibration alarm in the engine operation of the electric machine (2) powered by the latter and is capable of performing a rotational movement powering the generator in the generator operation of the electric machine (2) by moving the mobile communication device.

2. The mobile communication terminal according to claim 1, wherein the flywheel element (1) is formed as an unbalance.

3. The mobile communication terminal according to one of claims 1 and 2, wherein the flywheel element (1) is connected via an axis (4) to the electric machine (2).

4. The mobile communication terminal according to one of claims 1 to 3, wherein the guiding element (5) has a length L.

5. The mobile communication terminal according to one of the claims 1 to 4, wherein the guiding element (5) is arranged orthogonally to an axis (4) between the flywheel element (1) and the electric machine (2).

6. The mobile communication terminal according to claim 5, wherein the axis (4) divides the length L of the guiding element (5) into different lengths 11 and 12.

7. The mobile communication terminal according to claim 6, wherein the lengths 11 and 12 have the relation 11 * X = 12 to each other.

8. The mobile communication terminal according to claim 7, wherein holds: 1,2 < X < 4.

9. The mobile communication terminal according to one of claims 1 to 8, wherein the flywheel element (1) has a turning disk (7).

10. The mobile communication terminal according to one of claims 1 to 9, wherein a conduct system is provided that connects the at least one energy cell (12) and the electric machine (2) to each other.

11. The mobile communication terminal according to one of claims 1 to 10 comprising a controller (6) for reversing the polarity of the electric machine from the generator operation to the engine operation.

## Revendications

1. Dispositif de communication mobile comportant:
- une pluralité de composants électroniques intégrés et au moins une cellule d'énergie (12) pour alimenter un courant électrique à au moins un des composants électroniques intégrés,
- une machine électrique (2) pour générer de l'énergie électrique à partir de l'énergie mécanique suscitée par mouvement du dispositif de communication mobile dans une opération de générateur et pour l'usage comme moteur pour une alarme de vibration dans une opération de moteur, et
- un élément d'inertie (1) connecté à la machine électrique (2) avec un élément de poids (3) mobile selon un élément de guidage (5), l'élément d'inertie (1) étant capable d'effectuer un mouvement de secouage pour une alarme de vibration dans une opération de moteur de la machine électrique (2) actionnée par celle-ci et étant capable d'effectuer un mouvement de rotation actionnant le générateur dans l'opération de générateur de la machine électrique (2) par mouvement du dispositif de communication mobile.

2. Terminal de communication mobile selon la revendication 1, dans lequel l'élément d'inertie (1) est formé en tant que balourd.

3. Terminal de communication mobile selon l'une des revendications 1 et 2, dans lequel l'élément d'inertie (1) est connecté via un axe (4) à la machine électrique (2).

4. Terminal de communication mobile selon l'une des revendications 1 à 3, dans lequel l'élément de guidage (5) présente une longueur L.

5. Terminal de communication mobile selon l'une des revendications 1 à 4, dans lequel l'élément de guidage (5) est agencé orthogonalement à un axe (4) entre l'élément d'inertie (1) et la machine électrique (2).

6. Terminal de communication mobile selon la revendication 5, dans lequel l'axe (4) subdivise la longueur L de l'élément de guidage (5) dans des longueurs différentes 11 et 12.

7. Terminal de communication mobile selon la revendication 6, dans lequel les longueurs 11 et 12 présentent la relation 11 * = 12 entre eux.

8. Terminal de communication mobile selon la revendication 7, dans lequel est vrai: 1,2 < X < 4.

9. Terminal de communication mobile selon l'une des revendications 1 à 8, dans lequel l'élément d'inertie (1) présente une plaque tournante (7).

10. Terminal de communication mobile selon l'une des revendications 1 à 9, dans lequel un système de conduites est prévu qui connecte l'au moins une cellule d'énergie (12) et la machine électrique (2) l'une à l'autre.

11. Terminal de communication mobile selon l'une des revendications 1 à 10, comportant une commande (6) pour inverser les pôles de la machine électrique de l'opération de générateur à l'opération de moteur.
